# EUROPEAN PATENT SPECIFICATION

(11) **EP 2 524 597 B1**
(45) Date of publication and mention of the grant of the patent: **16.03.2016**
(21) Application number: 11732872.4
(22) Date of filing: 12.01.2011
(51) Int. Cl.: A01N 37/44, A01G 7/06, A01N 25/00, A01N 43/36, A01P 21/00

(54) **USE OF AN AGENT FOR ENHANCING RESISTANCE TO DISEASE OF CUCURBITACEAE PLANT AND A METHOD FOR CONTROLLING PLANT DISEASE USING THE AGENT**
VERSTÄRKER DER KRANKHEITSRESISTENZ FÜR PFLANZEN DER CUCURBITACEAE-FAMILIE SOWIE PFLANZENKRANKHEITSBEKÄMPFUNGSVERFAHREN DAMIT
AGENT DE POTENTIALISATION DE RÉSISTANCE AUX MALADIES DE PLANTE DE LA FAMILLE DES CUCURBITACÉES ET PROCÉDÉ DE LUTTE CONTRE MALADIE DE PLANTE UTILISANT CELUI-CI

(30) Priority: 13.01.2010 JP 2010005329
(43) Date of publication of application: 21.11.2012
(73) Proprietor: Ajinomoto Co., Inc., Tokyo 104-8315 (JP)
(72) Inventor: IGARASHI, Daisuke, Kawasaki-shi Kanagawa 210-8681 (JP); KADOTANI, Naoki, Kawasaki-shi Kanagawa 210-8681 (JP)
(74) Representative: Hoffmann Eitle
(86) International application number: PCT/JP2011/050302
(87) International publication number: WO 2011/087002

(56) References cited:
- WO-A1-00/25582
- CN-A- 101 182 270
- JP-A- 5 058 831
- JP-A- 6 080 530
- JP-A- H0 680 530
- JP-A- 2001 199 812
- JP-A- 2002 204 623
- JP-A- 2003 342 105
- JP-A- 2003 531 839
- JP-A- 2008 044 854
- "Yeast deletion haploid test protocol", , 7 November 2002 (2002-11-07), XP055070535, Retrieved from the Internet: URL:http://www-sequence.stanford.edu/group /yeast_deletion_project/ResGenxftp/haploid test.txt [retrieved on 2013-07-10] & , 1 January 2013 (2013-01-01), XP055070536, Retrieved from the Internet: URL:http://web.archive.org/web/*/http://ww w-sequence.stanford.edu/group/yeast_deleti on_project/ResGenxftp/haploidtest.txt [retrieved on 2013-07-10]
- ROBERT A. MACLEOD ET AL: "Nutrition and Metabolism of Marine Bacteria I. Survey of Nutrional Requirements", JOURNAL OF BACTERIOLOGY, vol. 68, no. 6, 31 December 1954 (1954-12-31), pages 680-686, XP055070554, ISSN: 0021-9193
- O. M. VAN ANDEL: "Amino Acids and Plant Diseases", ANNUAL REVIEW OF PHYTOPATHOLOGY, vol. 4, 30 September 1966 (1966-09-30), pages 349-368, XP055070567, ISSN: 0066-4286
- PARK K S ET AL: "L-Alanine Augments Rhizobacteria-Induced Systemic Resistance in Cucumber", FOLIA MICROBIOLOGICA, PRAQUE, CZ, vol. 54, no. 4, 1 January 2009 (2009-01-01), pages 322-326, XP008155696, ISSN: 0015-5632
- K. S. PARK ET AL.: 'L-Alanine Augments Rhizobacteria-Induced Systemic Resistance in Cucumber' FOLIA MICROBIOL. vol. 54, no. 4, 2009, pages 322 - 326, XP008155696

## Description

### Technical Field

The present invention relates to the use of an agent for enhancing resistance to a disease of a *Cucurbitaceae* plant containing an amino acid as an active ingredient, which imposes less stress on the environment, and is safe for users and consumers, and a method for controlling a plant disease.

### Background Art

In order to prevent diseases of agricultural crops, besides agricultural chemicals for preventing diseases by directly acting on pathogenic microbes of plant diseases such as fungicides, agricultural chemicals for controlling diseases of crops by enhancing disease resistance of plants themselves (resistance-inducing type agricultural chemicals) are used. Many of the agricultural chemicals of the type directly acting on pathogenic microbes of plant diseases such as fungicides shows antimicrobial effect on pathogenic microbes, but continuous use thereof frequently invites emergence of mutant strains resistant to the agricultural chemicals. On the other hand, the agricultural chemicals of the resistance-inducing type do not directly act on pathogenic microbes, but they control infection of diseases by inducing resistance of plants. Therefore, there has been recognized no example of emergence of mutant strain resistant to the agricultural chemicals of this type. Furthermore, since the resistance-inducing type agricultural chemicals show little toxic action against organisms, they are considered to impose comparatively little stress on the environment including organisms other than plants.

As the agricultural chemicals aiming at induction of disease resistance of plants, there are so far been marketed probenazole (trade name: Oryzemate, MEIJI PHARMACEUTICAL CO., LTD.), a benzothiazole (BTH) type compound, acibenzolar-S-methyl (ASM, trade name: Bion, Syngenta Japan, K.K.), and a thiadiazolecarboxamide type compound, tiadinil (trade name: V-GET, NIHON NOHYAKU CO., LTD.).

Further, as substances derived from natural products that induce disease resistance, there have been reported polysaccharide decomposition products (for example, Patent document 1), cerebrosides (for example, Patent document 2), jasmonic acid (for example, Patent document 3), chitin oligosaccharides (for example, Non-patent document 1), β-1,3- and β-1,6-glucan oligosaccharides (for example, Non-patent document 2), bile acid (Patent document 4), peptidoglycans (Non-patent document 3), lipopolysaccharides (Non-patent document 4), and so forth. These substances are called elicitors, and known to have effects of accumulating phytoalexins showing antimicrobial activity against pathogenic microbes, accumulating PR proteins (pathogenesis-related proteins) such as chitinase and β-1,3-glucanase, which lyse cell walls of pathogenic microbes, inducing hypersensitive cell death, and so forth (for example, Non-patent document 1).

Moreover, there are also disclosed a method for controlling infection of pathogenic microbes by sprinkling culture supernatant obtained by proline fermentation using bacteria belonging to the genus *Corynebacterium* (Patent document 5), and an agent for enhancing disease resistance for plants containing an extract obtained by heat treatment of microbial cells in an acidic solution (Patent document 6) .

As for amino acids, it has been reported that L-glutamic acid (Non-patent document 5) and proline (Non-patent document 6) control or suppress diseases of rice plant and *Pennisetum typhoideum,* respectively, but they are not described for *Cucurbitaceae* plants. Moreover, it has been reported that sulfur containing amino acids (Patent documents 7 and 8), aminobutyric acid (Patent document 7) and glycine (Patent document 9) control diseases of plants or enhance disease resistance of plants, when they are used in combination with a microorganism, glucose, or the like. However, these effects are not effects obtained with the amino acids alone. Further, although it has been reported that plant diseases can be controlled by application of a mixed fertilizer containing an amino acid (Patent documents 10, 11 and 12), these are also not effects obtained with the amino acids alone, and are not based on induction of disease resistance. Further, although control of plant diseases using an amino acid mixture (proline, methionine, and phenylalanine) has also been reported (Patent document 13), the effect is not effect of each single kind of amino acid, and is not based on induction of disease resistance, either. Furthermore, although disease control using culture broth obtained from lysine or glutamic acid fermentation has been reported (Patent document 14), any data are not described, thus the active ingredient is unknown, and it is not also clear whether the effect was obtained by induction of disease resistance or not. Moreover, although it has been reported that treatment of leaves of *Eleusine coracana* with DL-phenylalanine promoted synthesis of phenol substances, and inhibited spore germination and germ tube extension of *Cochliobolus miyabeanus* (Non-patent document 8), it is not described whether the phenylalanine treatment actually suppresses invasion or infection of the pathogenic microbe.

As for induction of disease resistance by an amino acid alone in cucumber, which is a *Cucurbitaceae* plant, it has been reported that alanine has such an effect (Non-patent document 7). However, other amino acids are not referred to.

### Prior art references

### Patent documents

Patent document 1: Japanese Patent Laid-open (KOKAI) No. 5-331016
Patent document 2: Japanese Patent No. 2846610
Patent document 3: Japanese Patent Laid-open No. 11-29412
Patent document 4: Japanese Patent Laid-open No. 2006-219372
Patent document 5: Japanese Patent Laid-open No. 6-80530
Patent document 6: International Publication WO2009/088074
Patent document 7: Japanese Patent Laid-open No. 2003-34607
Patent document 8: Japanese Patent No. 4287515
Patent document 9: Chinese Patent Laid-open No. 1640233A
Patent document 10: Chinese Patent No. 1316893C
Patent document 11: Chinese Patent Laid-open No. 1328769A
Patent document 12: Chinese Patent Laid-open No. 101182270A
Patent document 13: Chinese Patent Laid-open No. 101142925A
Patent document 14: Chinese Patent No. 1155543C
Patent document 15: International Publication WO00/25582

### Non-patent documents

Non-patent document 1: Yamada, A. et al., Biosci. Biotech. Biochem., 1993, 57(3):405-409
Non-patent document 2: Yamaguchi, T. et al., Plant Cell, 2000, 12:817-826
Non-patent document 3: Gust, A.A. et al., J. Biol. Chem., 2007, 282:32338-32348
Non-patent document 4: Newman, M.A. et al., Plant J. 2002, 29:487-495
Non-patent document 5: Voleti, S.R. et al., Crop Protection, 2008, 27:1398-1402
Non-patent document 6: Raj, S.N. et al., Phytoparasitica, 2004, 32:523-527
Non-patent document 7: Park, K.S. et al., Folia Microbiol., 2009, 54:322-326
Non-patent document 8: Purushothaman, D. et al., Current Science, 1974, 43:47-49
Non-patent document 9: Van Andal, O.M., Annual Review of Phytopathology, 1966, 4, 349-368

### Summary of the Invention

### Object to be Achieved by the Invention

An object of the present invention is to provide a use of an agent for enhancing resistance to a disease of a plant, which is safe for users and consumers, and inexpensive, and a method for controlling a disease of a plant using the same.

### Means for Achieving the Object

The inventors of the present invention searched for plant disease resistance-inducing substances, and found that amino acids had high disease resistance-inducing activity. In particular, they found that, when glutamic acid, threonine, serine or proline was applied to plants, there was an observed increase of the chitinase activity, which is an index of disease resistance-inducing activity, and marked disease resistance induction was provided. And they confirmed that treatments with these amino acids provided high disease controlling effect for such diseases as cucumber powdery mildew and cucumber anthracnose, and accomplished the present invention.

That is, the present invention is embodied as follows.
1. Use of glutamic acid and threonine in an agent for enhancing resistance to a disease of a *Cucurbitaceae* plant.
2. The use according to item 1, wherein the agent contains glutamic acid at 5 mM to 100 mM, and further contains threonine at 2 mM to 100 mM.
3. The use according to item 1 or 2, wherein the agent contains glutamic acid at 5 to 50 mM, and further contains threonine at 2 to 50 mM.
4. The use according to any one of items 1 to 3, wherein the *Cucurbitaceae* plant is cucumber, melon, pumpkin, or watermelon.
5. The use according to any one of items 1 to 4, wherein the disease is cucumber powdery mildew or cucumber anthracnose.
6. Use of glutamic acid and alanine in an agent for enhancing resistance to a disease of a *Cucurbitaceae* plant, wherein the agent comprises glutamic acid at 5 mM to 100 mM, and further contains alanine at 2 mM to 100 mM.
7. The use according to item 6, wherein the agent contains glutamic acid at 5 mM to 50 mM, and further contains alanine at 2 mM to 50 mM.
8. The use according to item 6 or 7, wherein the *Cucurbitaceae* plant is cucumber, melon, pumpkin, or watermelon.
9. The use according to any one of items 6 to 8, wherein the disease is cucumber powdery mildew or cucumber anthracnose.
10. A method for controlling a disease of a *Cucurbitaceae* plant, which comprises treating the *Cucurbitaceae* plant with the agent according to any one of items 1 to 5.
11. A method for controlling a disease of a *Cucurbitaceae* plant, which comprises treating the *Cucurbitaceae* plant with the agent according to any one of items 6 to 9.

### Brief Description of the Drawings

Fig. 1 shows disease resistance-inducing effects of amino acids provided in cucumber cotyledons by foliar application.
Fig. 2 shows disease resistance-inducing effects of amino acids provided in cucumber true leaves by foliar application.
Fig. 3 shows disease resistance-inducing effects of amino acids provided in pumpkin by foliar application.
Fig. 4 shows disease resistance-inducing effects of amino acids provided in melon by foliar application.
Fig. 5 shows disease resistance-inducing effects of amino acids provided in watermelon by foliar application.
Fig. 6 shows disease resistance-inducing effects of amino acid mixed solutions provided in cucumber cotyledons by foliar application.
Fig. 7 shows cucumber powdery mildew-controlling effects of amino acids provided by foliar application.
Fig. 8 shows cucumber anthracnose-controlling effects of amino acids provided by foliar application.
Fig. 9 shows cucumber anthracnose-controlling effect of an amino acid provided by application to rhizosphere.

### Embodiments for Carrying out the Invention

Hereafter, the present invention will be explained in detail.

The agent used for enhancing resistance to a disease of a *Cucurbitaceae* plant in the present invention contains an amino acid selected from the group consisting of glutamic acid, threonine, serine, and proline as an active ingredient wherein the agent contains at least glutamic acid and threonine or glutamic acid at 5 mM to 100 mM and alanine at 2 mM to 100 mM.

When the agent for enhancing resistance to a disease contains glutamic acid, the agent further contains threonine and/or alanine.

The amino acid may be an L-amino acid or a D-amino acid, or a mixture of L- and D-amino acids containing them at an arbitrary ratio, but the amino acid is preferably an L-amino acid.

The amino acid is a mixture of glutamic acid and threonine, or glutamic acid and alanine. The amino acid may contain an amino acid other than these amino acids, but it is preferred that the amino acid does not contain any amino acid other than these amino acids.

Glutamic acid may be in the free form, or may be in the form of salt such as ammonium salt, sodium salt and potassium salt.

The form of the amino acid is not particularly limited so long as it contains the amino acids, and it may be any of generally sold reagents, purified products or roughly purified products produced by fermentation, and compositions containing the amino acids such as extracts of marine products and protein hydrolysates.

As demonstrated in the examples, if glutamic acid, threonine, serine, or proline is applied to a *Cucurbitaceae* plant, the chitinase activity in a tissue of the plant such as leaves is increased. Moreover, the chitinase activity-increasing action of glutamic acid is further enhanced when it is combined with threonine and/or alanine.

Plant disease resistance is enhanced by a series of reactions represented by production of active oxygen species, accumulation of antimicrobial proteins and antimicrobial compounds, strengthening of cell walls, and accumulation of antimicrobial enzymes such as chitinase and glucanase, which are often caused in plants at the time of infection with bacteria, filamentous fungi, etc. in order to prevent expansion of the infection. It is known that there is correlation between the chitinase activity and enhancement of disease resistance. For example, Irving, H. et al. described that when K₂HPO₄ was applied to cucumber by foliar application, systemic acquired resistance (SAR) was induced, and thereby cucumber anthracnose could be suppressed, and they used increase of the chitinase activity as an index of SAR (Physiological and Molecular Plant Pathology, 1990, 37:355-366). Further, Schlumbaum, A. et al. also reported that the activity of the antimicrobial enzyme, chitinase, increased in leguminous plants as a response to infection with pathogenic microbes (Nature, 1986, 324:365-367).

As demonstrated in the examples, it was confirmed that independent application of glutamic acid or serine, or mixed application of glutamic acid and alanine enhanced resistance to cucumber anthracnose and cucumber powdery mildew, and that application of glutamic acid, threonine or serine enhanced resistance to melon anthracnose, and thus correlation of the chitinase activity and enhancement of disease resistance was confirmed. Therefore, it is considered that proline, which was confirmed to have an activity of increasing the chitinase activity of a plant, also has an action of enhancing disease resistance.

The agent for enhancing resistance to a disease of a plant may contain arbitrary components in addition to the amino acid. Examples of the components include such components as solvent, carrier, pH adjustor, spreading agent for enhancing spreading power on plant bodies, surfactant for enhancing permeability of plants, fertilizer component for enhancing fertilizing effect such as minerals, agrochemical component, binder, filler, and so forth. As these components, components usually used for agricultural chemicals, fertilizers, and so forth can be used, so long as the effect of the present invention is not degraded.

Examples of the solvent include water, alcohols, and so forth. Examples of the carrier include mineral type carriers and vegetable type carriers such as calcium carbonate, diatomaceous earth and perlite.

As described above, the agent for enhancing resistance to a disease of a plant may be a composition containing an amino acid and other components, i.e., a composition for enhancing resistance to a disease of a plant. However, the agent for enhancing resistance to a disease of a plant may consist only of the amino acid.

Further, the agent for enhancing resistance to a disease of a plant in the form of solid or powder may be dissolved or dispersed in a solvent such as water at the time of use.

The content of the amino acid in the agent for enhancing resistance to a disease of a plant is not in particularly limited, and can be suitably determined according to the application amount described below. For example, although content of the amino acid in the agent for enhancing resistance to a disease of a plant is not particularly limited so long as the amino acid can be applied in an amount effective for enhancement of disease resistance, it is, for example, usually 1 to 200 mM, preferably 2 to 100 mM, when the agent contains a single kind of amino acid. When the agent contains two or more kinds of amino acids, content of each amino acid is usually 1 to 200 mM, preferably 2 to 100 mM. Further, when glutamic acid is used in combination with alanine and/or threonine, the agent preferably contains glutamic acid at 0.2 to 100 mM, more preferably 1 to 50 mM, and one or both of alanine and threonine at 0.2 to 100 mM, more preferably 1 to 50 mM, individually or in both. When the agent for enhancing resistance to a disease of a plant is in the form of solid or powder, the concentration described above is a concentration of a solution prepared with the agent at the time of use.

The *Cucurbitaceae* plant as an object of the application of the agent for enhancing resistance to a disease of a plant is not particularly limited, and examples include cucumber, melon, pumpkin, watermelon, and so forth.

Since the general disease resistance responses of plants are nonspecific to pathogenic microbes, the objective disease is not particularly limited, and examples include, for example, plant diseases caused by filamentous fungi, bacteria and viruses. Typical examples of diseases of *Cucurbitaceae* plants include cucumber bacterial wilt, cucumber powdery mildew, cucumber bacterial brown spot, cucumber leaf blight, cucumber anthracnose, cucumber gummy stem blight, cucumber Fusarium wilt, cucumber damping-off, cucumber bacterial soft rot, cucumber root rot, cucumber gray mold, cucumber downy mildew, melon bacterial wilt, melon powdery mildew, melon bacterial brown spot, melon leaf blight, melon anthracnose, melon gummy stem blight, melon Fusarium disease, melon damping-off, melon bacterial soft rot, melon root rot, melon gray mold, melon downy mildew, and so forth. Among these, the agent of the present invention is especially effective on cucumber powdery mildew and cucumber anthracnose. Examples of the pathogenic microbes of these diseases include cucumber powdery mildew fungus (*Erysiphe polygoni*), cucumber anthracnose fungus (*Colletotrichum orbiculare* (syn: *C*. *orbiculare*), and so forth.

By applying the agent for enhancing resistance to a disease to a *Cucurbitaceae* plant, resistance to such diseases as described above can be enhanced. Although application method is not particularly limited, examples include, for example, sprinkling on plant body, sprinkling to rhizosphere, such as sprinkling on soil surface, irrigation, or mixing in soil, application to plant body, and dipping of root. Among these, sprinkling on plant body, for example, sprinkling on leaf surface (foliar application), is preferred. Further, when the agent for enhancing resistance to a disease contains glutamic acid, sprinkling to rhizosphere is also preferred.

The method for controlling a plant disease of the present invention mainly aiming at prophylaxis of the disease, and it is preferable to use it at a stage before outbreak of the disease. However, when it is applied even after outbreak of a disease, effect of suppressing expansion of the disease, or decreasing the disease can be expected.

Application amount of the agent for enhancing resistance to a disease may vary depending on concentration of the active ingredient, application stage, number of times of application, type of plant, cultivation density, growth stage, application method, and so forth. In the case of foliar application, the application amount is, for example, usually 100 to 5000 L/hectare at a concentration of 1 to 200 mM, preferably 500 to 1000 L/hectare at a concentration of 2 to 200 mM, when glutamic acid, threonine, serine, or proline alone is contained in the agent, or usually 100 to 5000 L/hectare at a concentration of 0.4 to 200 mM, preferably 500 to 1000 L/hectare at a concentration of 2 to 200 mM, in terms of total amount, when glutamic acid and threonine, or glutamic acid and alanine are used in combination. When glutamic acid and threonine are used in combination, amount ratio (molar ratio) of glutamic acid and threonine is usually 10:1 to 1:2, preferably 5:1 to 1:1. When glutamic acid and alanine are used in combination, amount ratio (molar ratio) of glutamic acid and alanine is usually 10:1 to 1:2, preferably 5:1 to 1:1. When glutamic acid, threonine and alanine are used in combination, they can be applied in amounts similar to the aforementioned application amounts. Further, when glutamic acid is applied to rhizosphere, the application amount may be the same as the aforementioned amount for foliar application of glutamic acid alone. Number of times of the application may be one, or two or more, and it can be appropriately determined depending on outbreak of a disease or symptom thereof.

### Examples

Hereafter, the present invention will be still more specifically explained with reference to examples. However, the present invention is not limited by these examples.
The amino acids used in the following examples are L-amino acids.

### Example 1: Evaluation of induction of plant disease resistance based on enzymatic activity

### (1) Methods for cultivation of plants and sprinkling

Induction of plant disease resistance in cucumber was evaluated by using cotyledons and first true leaves. For the evaluation using cotyledons, cucumber plants (variety: "Tokiwa jibai") cultivated for one week after seeding on compost for horticulture (Power Soil, Kureha Chemical Industry Co., Ltd.) were used. For the evaluation using true leaves, cucumber plants (variety: "Yotsuba") cultivated for two weeks after seeding on compost for horticulture (Power Soil, Kureha Chemical Industry Co., Ltd.) were used.

Evaluation for pumpkin, melon and watermelon were performed by using first true leaves of pumpkin (variety "Hokkorihime "), melon (variety: "Lenon"), and watermelon (variety: "Benikodama") plants cultivated for two weeks after seeding on compost for horticulture (Power Soil, Kureha Chemical Industry Co., Ltd.).

The plants were cultivated in a cultivation house at a temperature of 23 to 25°C with diurnal periodicity of 14-hour light period at a light intensity of about 100 µmol/m²/s. For the usual foliar application, Approach BI (Kao Corp., "Approach BI" is a registered trademark of Kao Corp.) was added at a 1/1000 concentration as a spreading agent. For the treatment of cotyledons, each test solution was dropped on the cotyledons at 25 places in a volume of 2 µl each, and the dropped regions were collected as samples for enzymatic activity measurement. For the treatment of true leaves, each test solution was sprayed in a volume of about 1 mL/100 cm² with a sprayer, and 2-cm square samples at the center of the leaves were collected as samples for enzymatic activity measurement.

### (2) Extraction of enzyme

Immediately after the aforementioned collection of the samples for enzymatic activity measurement, they were frozen with liquid nitrogen and stored at -80°C. Each sample in the frozen state was crushed with a plant crusher MM300 MIXER MILL GRINDER (Retsch), and suspended in 300 µL of an extraction buffer [100 mM NaH₂PO₄/Na₂HPO₄ (pH 6.0), 1 mM DTT, protease inhibitor/complete mini EDTA free (Roche)]. The suspension was centrifuged at 10,000 rpm for 5 minutes, and the supernatant was filtered through a 0.22-µm filter to remove insoluble matter. The obtained fraction as a crude extract fraction, of which protein concentration was measured by the Bradford method, was used for the enzymatic activity measurement.

### (3) Chitinase activity measurement

The chitinase activity was measured by the method of McCreath et al. (McCreath, K. et al., J. Microbiol. Methods, 1992, 14:229-237). The substrate, 4MU-(GlcNAc)₃ (4-methylumbelliferyl-β-d-N,N',N''-triacetylchitobiose, SIGMA M5639) was dissolved in 50% ethanol at a final concentration of 0.4 mM, and stored at -20°C. This substrate stock solution was diluted 10 times at the time of use, and used as a substrate solution. The aforementioned crude extract fraction was adjusted to a protein concentration of 1 µg/µL. Each sample (50 µL) was preincubated at 37°C for 10 minutes on a 96-well plate, and then 50 µL of the substrate solution was added to the sample to start the reaction at 37°C.

Thirty minutes and 90 minutes after the start of the reaction in the experiment using cucumber cotyledons, 90 minutes and 120 minutes after the start of the reaction in the experiments using the true leaves of cucumber, pumpkin and melon, or 60 minutes and 120 minutes after the start of the reaction in the experiment using the true leaves of watermelon, 100 µl of 1 M Gly/NaOH buffer (pH 10.2) was added to the reaction mixture to terminate the reaction. The reaction and the termination of the reaction were attained on the 96-well plate in a final reaction volume of 200 µL. After completely removing the bubbles on the surface of the reaction mixture, fluorescence intensity was measured by using a plate reader for fluorescence detection, SpectraMax M2 (Molecular Devices). In this fluorometry, the measurement was performed at 360 nm (excitation) and 450 nm (emission). On the basis of the standard value calculated by using 4MU (4-methylumbelliferone) as a standard substance, the amount of the enzyme catalyzing the reaction for 1 µmol of the substrate per 1 minute was defined as 1 unit.

### (4) Results

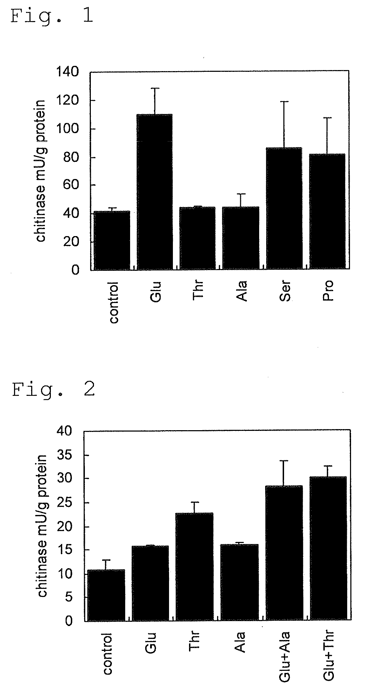

Solutions of a single kind of amino acid at 100 mM concentration for various amino acids were each applied to cucumber cotyledons, and the enzymatic activity was measured after 48 hours. The results are shown in Fig. 1. Values of average and SD for the results of the experiments carried out in triplicate are shown in Fig. 1. It was found that sodium glutamate (henceforth referred to as "glutamic acid"), serine and proline had an effect of increasing the chitinase activity, which is a marker of disease resistance induction.

Solutions of a single kind of amino acid at 20 mM concentration for various amino acids were applied to cucumber true leaves as each solution or a mixture of the solutions, and the enzyme activity was measured after 48 hours. The results are shown in Fig. 2. Values of average and SD for the results of the experiments carried out in triplicate are shown in Fig. 1. It was found that threonine had an effect of increasing the chitinase activity, which is a marker of disease resistance induction. It was also found that the activity was enhanced by adding alanine or threonine to glutamic acid.

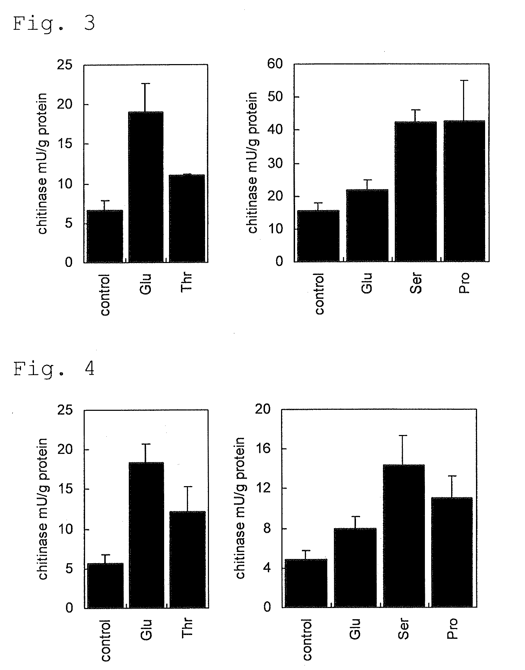

Solutions of a single kind of amino acid at 20 mM concentration for various amino acids were each applied to true leaves of pumpkin, melon, and watermelon, and the enzyme activity was measured after 48 hours. The results are shown in Figs. 3, 4 and 5, respectively. Values of average and SD for the results of the experiments carried out in triplicate are shown in Figs. 3, 4 and 5. It was found that glutamic acid, threonine, serine, and proline had an effect of increasing the chitinase activity, which is a marker of disease resistance induction.

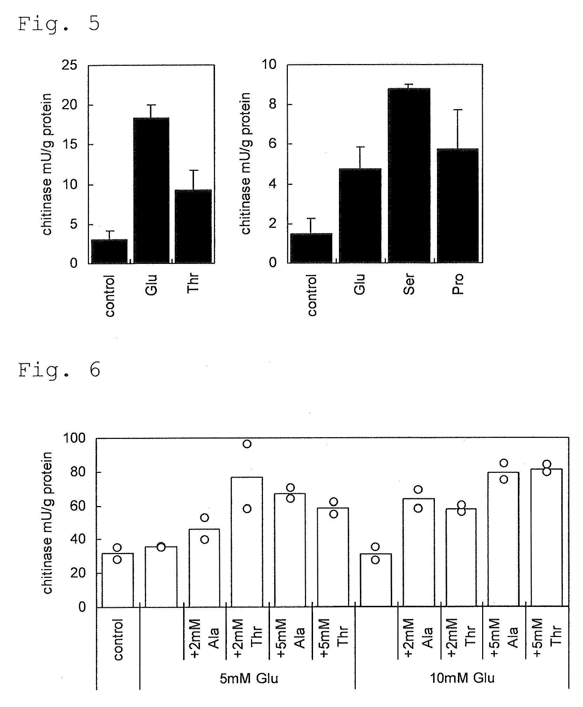

Mixed solutions of glutamic acid (5 mM or 10 mM) and alanine or threonine (2 mM or 5 mM) were each applied to cucumber cotyledons, and the enzyme activity was measured after 48 hours. The results are shown in Fig. 6. Values of average for the results of the experiments carried out in duplicate are indicated with bars, and the values for each result are indicated with circles. Whereas the effect was hardly observed with glutamic acid alone at the aforementioned concentrations, the effect was distinctly observed with the mixed solutions further containing alanine or threonine (2 mM or 5 mM).

### Example 2: Effect of controlling cucumber powdery mildew and cucumber anthracnose

### (1) Methods for cultivation of plants and sprinkling

For the experiment, cucumber plants (variety: "Yotsuba") cultivated for two weeks after seeding on compost for horticulture (Power Soil, Kureha Chemical Industry Co., Ltd.) were used. The plants were cultivated in a cultivation house at a temperature of 23 to 25°C with diurnal periodicity of 14-hour light period at a light intensity of about 100 µmol/m²/s. Forty eight hours after the foliar application of each sample solution, each of the pathogenic microbes described below was inoculated by spraying. To the solution for sprinkling, Approach BI (Kao Corp.) was added in a 1/1000 amount.

### (2) Evaluation for control of cucumber powdery mildew

The cucumber powdery mildew fungus (*Sphaerotheca fuliginea*) was isolated from a surface of a leaf naturally grown in a field. The obtained pathogenic microbe was maintained by infection on a plant on the 11th day after seeding every 2 weeks in a thermoregulated incubator at 23 to 25°C, and used in the following experiment.

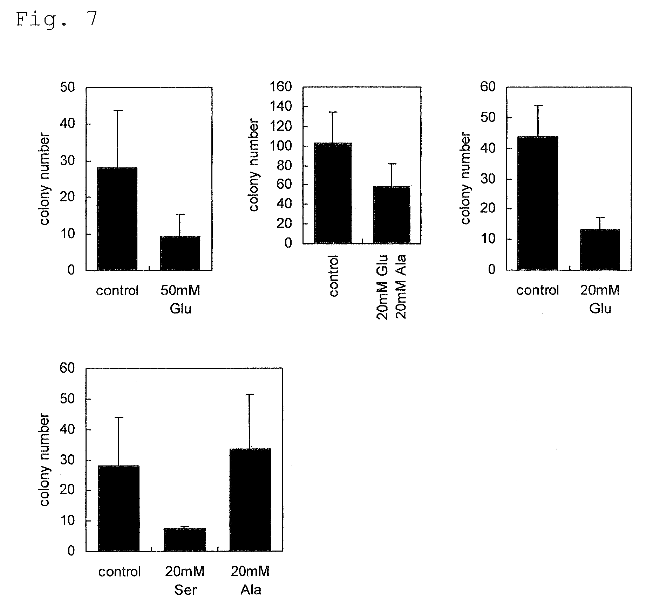

Solutions of 50 mM or 20 mM glutamic acid, 20 mM serine, and 20 mM alanine, and a mixed solution of 20 mM glutamic acid and 20 mM alanine were each sprinkled on first true leaves of cucumber plants two weeks after seeding, and 48 hours after the sprinkling, the cucumber powdery mildew fungus (*Erysiphe polygoni*) was inoculated. The inoculation was performed by spraying a conidial suspension (2 x 10⁵ conidia/mL) on leaf surfaces. The evaluation was performed by counting number of colonies that emerged on each treated leaf 10 days after the inoculation. The results are shown in Fig. 7. Values of average and SD of the results of the experiments carried out in triplicate to sextuplicate are shown. It was demonstrated that, compared with the result of the control, infection of the pathogenic microbe could be significantly suppressed by the foliar application of glutamic acid, serine, and the mixed solution of glutamic acid and alanine. On the other hand, it was also shown that infection of the pathogenic microbe could not be controlled by the foliar application of alanine.

### (3) Evaluation of control of cucumber anthracnose

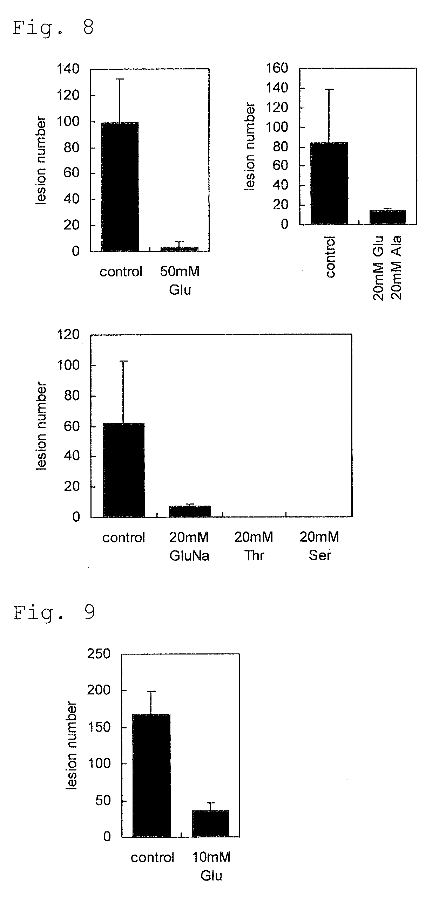

A solution of 50 mM glutamic acid, a mixed solution of 20 mM glutamic acid and 20 mM alanine, and solutions of 20 mM glutamic acid, 20 mM serine, and 20 mM threonine were each sprayed on first true leaves of cucumber plants two weeks after seeding, and 48 hours after the spraying, the *Cucurbitaceae* plant anthracnose fungus (*Colletotrichum lagenarium* (syn: *C. orbiculare*) was inoculated. The inoculation was performed by spraying a conidium suspension (1 x 10⁵ conidia/mL) on leaf surfaces. After the inoculation by spraying, the *Cucurbitaceae* plant anthracnose fungus was infected in the plants by leaving the inoculated plants standing in a dark and humid place for 24 hours. The evaluation was performed by counting number of pathological lesions that emerged on each treated leaf 7 days after the inoculation. The results are shown in Fig. 8. Values of average and SD of each experiment carried out in triplicate are shown. As shown in Fig. 8, it was demonstrated that, compared with the result of the control, infection of the pathogenic microbe could be significantly suppressed by the foliar application of glutamic acid, a mixed solution of glutamic acid and alanine, serine, or threonine.

### Example 3: Effect of controlling melon anthracnose

### (1) Methods for cultivation of plants and sprinkling

For the experiment, melon plants (variety: "Lenon") cultivated for two weeks after seeding on compost for horticulture (Power Soil, Kureha Chemical Industry Co., Ltd.) were used. The plants were cultivated in a cultivation house at a temperature of 23 to 25°C with diurnal periodicity of 14-hour light period at a light intensity of about 100 µmol/m²/s. Forty eight hours after foliar application of each sample solution, the pathogenic microbe described below was inoculated by spraying. To the solutions for sprinkling, Approach BI (Kao Corp.) was added in a 1/1000 amount.

### (2) Evaluation for control of melon anthracnose

Solutions of 20 mM glutamic acid, 20 mM serine, and 20 mM threonine were each sprayed on first true leaves of melon plants two weeks after seeding, and 48 hours after the spraying, the *Cucurbitaceae* plant anthracnose fungus [*Colletotrichum lagenarium*] (syn.: *C. orbiculare*) was inoculated. The inoculation was performed by spraying a conidial suspension (1 x 10⁵ conidia/mL) on leaf surfaces. After the inoculation by spraying, the *Cucurbitaceae* plant anthracnose fungus was infected in the plants by leaving the inoculated plants standing in a dark and humid place for 24 hours. The evaluation was performed by comparing numerically indicated outbreak ratio of the disease as the severity of the disease. That is, the severity was classified into the following 4 stages indicated with the scores thereof [0: no symptom, 1: breaking out in less than 20% of leaves, 2: breaking out in 20% or more of leaves, 3: partially blighting]. The results are shown in Table 1. Each solution was applied to three individuals, and severities of the individuals are each shown. As shown in Table 1, it was demonstrated that, compared with the control, infection of the pathogenic microbe could be significantly suppressed by the foliar application of glutamic acid, threonine, or serine.

**Table 1**

| Treatment solution | Outbreak ratio in each individual | | |
|---|---|---|---|
| Control | 2 | 2 | 3 |
| 20 mM Glu | 1 | 1 | 1 |
| 20 mM Thr | 1 | 1 | 1 |
| 20 mM Ser | 1 | 1 | 1 |

### Example 4: Effect of rhizosphere application of amino acid for controlling Cucurbitaceae plant anthracnose in cucumber

Roots of cucumber plants two weeks after seeding were immersed in a 10 mM glutamic acid solution, and 48 hours after the immersion, the *Cucurbitaceae* plant anthracnose fungus [*Colletotrichum lagenarium*] (syn.: *C. orbiculare*) was inoculated. The inoculation was performed by spraying a conidial suspension (1 x 10⁵ conidia/mL) on leaf surfaces. After the inoculation by spraying, the *Cucurbitaceae* plant anthracnose fungus was infected in the plants by leaving the inoculated plants standing in a dark and humid place for 24 hours. The evaluation was performed by counting number of pathological lesions that emerged on each treated leaf 7 days after the inoculation. The results are shown in Fig. 9. Values of average and SD of the results of the experiment carried out in triplicate are shown. As shown in Fig. 9, it was demonstrated that, compared with the result of the control, infection of the pathogenic microbe could be significantly suppressed by application of glutamic acid to rhizosphere.

### Industrial Applicability

The use of an agent for enhancing resistance to a disease of a *Cucurbitaceae* plant of the present invention is highly safe, and the agent can be produced at low cost. Moreover, disease resistance of *Cucurbitaceae* plants can be effectively enhanced by the method of the present invention.

It is known that continuous use of agricultural chemicals of the type directly acting on pathogenic microbes of plant diseases such as fungicides frequently invites emergence of mutant strains resistant to the agricultural chemicals, but resistant strains hardly emerge for agricultural chemicals of the resistance-inducing type, and thus they can be used for a long period of time. The amino acids as the active ingredient of the agent for enhancing resistance to a disease of the present invention prevent infection of pathogenic microbes by inducing disease resistance, not by direct antimicrobial action on the pathogenic microbes. Therefore, it is expected to hardly invite emergence of mutant strains, and be usable for a long period of time, and thus it is extremely industrially useful.

## Claims

1. Use of glutamic acid and threonine in an agent for enhancing resistance to a disease of a *Cucurbitaceae* plant.

2. The use according to claim 1, wherein the agent contains glutamic acid at 5 mM to 100 mM, and further contains threonine at 2 mM to 100 mM.

3. The use according to claim 1 or 2, wherein the agent contains glutamic acid at 5 to 50 mM, and further contains threonine at 2 to 50 mM.

4. The use according to any one of claims 1 to 3, wherein the *Cucurbitaceae* plant is cucumber, melon, pumpkin, or watermelon.

5. The use according to any one of claims 1 to 4, wherein the disease is cucumber powdery mildew or cucumber anthracnose.

6. Use of glutamic acid and alanine in an agent for enhancing resistance to a disease of a *Cucurbitaceae* plant, wherein the agent comprises glutamic acid at 5 mM to 100 mM, and further contains alanine at 2 mM to 100 mM.

7. The use according to claim 6, wherein the agent contains glutamic acid at 5 mM to 50 mM, and further contains alanine at 2 mM to 50 mM.

8. The use according to claim 6 or 7, wherein the *Cucurbitaceae* plant is cucumber, melon, pumpkin, or watermelon.

9. The use according to any one of claims 6 to 8, wherein the disease is cucumber powdery mildew or cucumber anthracnose.

10. A method for controlling a disease of a *Cucurbitaceae* plant, which comprises treating the *Cucurbitaceae* plant with the agent as described in any one of claims 1 to 5.

11. A method for controlling a disease of a *Cucurbitaceae* plant, which comprises treating the *Cucurbitaceae* plant with the agent as described in any one of claims 6 to 9.

## Patentansprüche

1. Verwendung von Glutaminsäure und Threonin in einem Mittel zum Steigern der Widerstandsfähigkeit einer *Cucurbitaceae*-Pflanze gegenüber einer Krankheit.

2. Verwendung gemäß Anspruch 1, wobei das Mittel 5 mM bis 100 mM Glutaminsäure enthält, und ferner 2 mM bis 100 mM Threonin enthält.

3. Verwendung gemäß Anspruch 1 oder 2, wobei das Mittel 5 mM bis 50 mM Glutaminsäure enthält, und ferner 2 mM bis 50 mM Threonin enthält.

4. Verwendung gemäß einem der Ansprüche 1 bis 3, wobei die *Cucurbitaceae*-Pflanze Gurke, Melone, Kürbis, oder Wassermelone ist.

5. Verwendung gemäß einem der Ansprüche 1 bis 4, wobei die Krankheit Echter Mehltau der Gurke oder Gurken-Anthraknose ist.

6. Verwendung von Glutaminsäure und Alanin in einem Mittel zum Steigern der Widerstandsfähigkeit einer *Cucurbitaceae-*Pflanze gegenüber einer Krankheit, wobei das Mittel 5 mM bis 100 mM Glutaminsäure enthält, und ferner 2 mM bis 100 mM Alanin enthält.

7. Verwendung gemäß Anspruch 6, wobei das Mittel 5 mM bis 50 mM Glutaminsäure enthält, und ferner 2 mM bis 50 mM Alanin enthält.

8. Verwendung gemäß Anspruch 6 oder 7, wobei die *Cucurbitaceae*-Pflanze Gurke, Melone, Kürbis, oder Wassermelone ist.

9. Verwendung gemäß einem der Ansprüche 6 bis 8, wobei die Krankheit Echter Mehltau der Gurke oder Gurken-Anthraknose ist.

10. Verfahren zum Kontrollieren einer Krankheit einer *Cucurbitaceae*-Pflanze, welches Behandeln der *Cucurbitaceae*-Pflanze mit dem Mittel gemäß einem der Ansprüche 1 bis 5 umfasst.

11. Verfahren zum Kontrollieren einer Krankheit einer *Cucurbitaceae*-Pflanze, welches Behandeln der *Cucurbitaceae-*Pflanze mit dem Mittel gemäß einem der Ansprüche 6 bis 9 umfasst.

## Revendications

1. Utilisation d'acide glutamique et de thréonine dans un agent pour améliorer la résistance à une maladie d'une plante de la famille des cucurbitacées.

2. Utilisation selon la revendication 1, dans laquelle l'agent contient de l'acide glutamique à une concentration de 5 mM à 100 mM, et contient en outre de la thréonine à une concentration de 2 mM à 100 mM.

3. Utilisation selon la revendication 1 ou 2, dans laquelle l'agent contient de l'acide glutamique à une concentration de 5 à 50 mM, et contient en outre de la thréonine à une concentration de 2 à 50 mM.

4. Utilisation selon l'une quelconque des revendications 1 à 3, dans laquelle la plante de la famille des cucurbitacées est le concombre, le melon, le potiron, ou la pastèque.

5. Utilisation selon l'une quelconque des revendications 1 à 4, dans laquelle la maladie est l'oïdium du concombre ou l'anthracnose du concombre.

6. Utilisation d'acide glutamique et d'alanine dans un agent pour améliorer la résistance à une maladie d'une plante de la famille des cucurbitacées, dans laquelle l'agent comprend de l'acide glutamique à une concentration de 5 mM à 100 mM, et contient en outre de l'alanine à une concentration de 2 mM à 100 mM.

7. Utilisation selon la revendication 6, dans laquelle l'agent contient de l'acide glutamique à une concentration de 5 mM à 50 mM, et contient en outre de l'alanine à une concentration de 2 mM à 50 mM.

8. Utilisation selon la revendication 6 ou 7, dans laquelle la plante de la famille des cucurbitacées est le concombre, le melon, le potiron, ou la pastèque.

9. Utilisation selon l'une quelconque des revendications 6 à 8, dans laquelle la maladie est l'oïdium du concombre ou l'anthracnose du concombre.

10. Procédé pour lutter contre une maladie d'une plante de la famille des cucurbitacées, qui comprend le traitement de la plante de la famille des cucurbitacées avec l'agent tel que décrit dans l'une quelconque des revendications 1 à 5.

11. Procédé pour lutter contre une maladie d'une plante de la famille des cucurbitacées, qui comprend le traitement de la plante de la famille des cucurbitacées avec l'agent tel que décrit dans l'une quelconque des revendications 6 à 9.
